# EUROPÄISCHE PATENTSCHRIFT

(11) **EP 1 543 700 B1**
(45) Veröffentlichungstag und Bekanntmachung des Hinweises auf die Patenterteilung: **09.05.2007**
(21) Anmeldenummer: 03798882.1
(22) Anmeldetag: 01.09.2003
(51) Int. Cl.: H04Q 7/38

(54) **VERFAHREN ZUM BETRIEBEN EINES MOBILFUNKSYSTEMS SOWIE EINRICHTUNG ZUM BESTIMMEN EINER TEILGRUPPE VON BENACHBARTEN FUNKZELLEN EINES MOBILFUNKSYSTEMS**
METHOD FOR OPERATING A MOBILE RADIO TELEPHONE SYSTEM AND DEVICE FOR DETERMINING A SUB-GROUP OF ADJACENT RADIO CELLS IN A MOBILE RADIO TELEPHONE SYSTEM
PROCEDE PERMETTANT DE FAIRE FONCTIONNER UN SYSTEME DE RADIOTELEPHONIE MOBILE ET DISPOSITIF PERMETTANT DE DETERMINER UN SOUS-GROUPE DE CELLULES RADIO ADJACENTES D'UN SYSTEME DE TELEPHONIE MOBILE

(30) Priorität: 27.09.2002 DE 10245118
(43) Veröffentlichungstag der Anmeldung: 22.06.2005
(73) Patentinhaber: SIEMENS AKTIENGESELLSCHAFT, 80333 München (DE)
(72) Erfinder: FREY, Andreas, 73312 Geislingen (DE); CAN, Rifat, 89075 Ulm (DE); FLENDER, Hans-Ulrich, 89081 Ulm (DE)
(86) Internationale Anmeldenummer: PCT/EP2003/009706
(87) Internationale Veröffentlichungsnummer: WO 2004/032551

(56) Entgegenhaltungen:
- EP-A- 0 986 279
- US-A1- 2002 077 103
- US-B1- 6 195 342
- US-B1- 6 212 382

## Beschreibung

Die Erfindung betrifft ein Verfahren zum Betrieb eines Mobilfunksystems sowie eine Einrichtung zum Bestimmen einer Teilgruppe von benachbarten Funkzellen eines Mobilfunksystems.

Zellulare Mobilfunksysteme weisen üblicherweise eine große Anzahl von einander jeweils benachbarten Funkzellen auf, die von jeweils einer Basisstation versorgt werden. Dabei kann eine Basisstation mit gerichteten Sektorantennen auch mehrere der Funkzellen versorgen. Mobilstationen, die sich in einer der Funkzellen befinden, kommunizieren in der Regel mit der Basisstation der betreffenden Funkzelle. Sind jedoch die Übertragungskapazitäten der jeweiligen Basisstation erschöpft oder ist die Übertragungsqualität zu dieser Basisstation beeinträchtigt, weil sich die Mobilstation beispielsweise am Rand der jeweiligen Funkzelle und somit relativ weit entfernt von der Basisstation befindet, oder nimmt die Mobilstation einen Ortswechsel in eine benachbarte Funkzelle vor, ist es notwendig, dass eine Kommunikation zwischen der Mobilstation und einer neuen Basisstation einer der benachbarten Funkzellen aufgebaut wird. Um zu entscheiden, mit welcher neuen Basisstation bzw. in welcher neuen Funkzelle eine Kommunikation mit der Mobilstation hergestellt werden soll, ist es üblich, dass die Mobilstation auf Organisationskanälen aller benachbarten Basisstationen ausgesandte Signale empfängt und bezüglich ihrer Empfangsqualität auswertet. Anhand dieser Messergebnisse kann dann entschieden werden, mit welcher neuen Basisstation die Mobilstation die Kommunikation aufnehmen soll.

Bekannte zellulare Mobilfunksysteme arbeiten derzeit beispielsweise nach dem Standard GSM (Global System of Mobile Communication) oder werden zukünftig nach dem Standard der dritten Mobilfunkgeneration, UMTS (Universal Mobile Telecommunications Standard) arbeiten. Oft ist es vorgesehen, dass bei einem Wechsel der Mobilstation von einer ersten Funkzelle in eine Nachbarzelle die Signale aller der ersten Funkzelle benachbarten Basisstationen ausgemessen werden.

Die US 6 195 342 B1 offenbart ein Verfahren bzw. eine Einrichtung gemäß Oberbegriff von Anspruch 1 bzw. 9. Weitere ähnliche Verfahren werden in der US 2002/0077103 A1 sowie in der US 6 212 382 B1 beschrieben.

Der Erfindung liegt die Aufgabe zugrunde, das Durchführen der Messungen von Signalen von Basisstationen in Nachbarzellen, das beispielsweise vor der Durchführung eines Zellwechsels von einer Mobilstation durchgeführt wird, zu verbessern.

Diese Aufgabe wird mit einem Verfahren gemäß Anspruch 1 sowie einer Einrichtung gemäß Anspruch 9 gelöst.

Vorteilhafte Aus- und Weiterbildungen der Erfindung sind Gegenstand abhängiger Ansprüche.

Das erfindungsgemäße Verfahren zum Betrieb eines Mobilfunksystems mit wenigstens einer ersten Funkzelle und mehreren der ersten Funkzelle benachbarten Funkzellen, die durch jeweils eine Basisstation versorgt werden, sieht vor, dass in Abhängigkeit einer Position einer Mobilstation innerhalb der ersten Funkzelle eine Teilgruppe der benachbarten Funkzelle bestimmt wird und dass anschließend die Mobilstation Messungen eines Qualitätsparameters von Signalen der Basisstationen nur dieser Teilgruppe der benachbarten Funkzellen durchführt.

Dabei kann die Teilgruppe der benachbarten Funkzellen so ausgewählt werden, dass für die bestimmte Position innerhalb der ersten Funkzelle die von ihren Basisstationen empfangenen Signale eine bessere Empfangsqualität aufweisen, als Signale, die von den Basisstationen der anderen benachbarten Funkzellen stammen, die nicht der Teilgruppe angehören. Die Teilgruppe kann daher im Vorhinein (d.h. vor der Durchführung der Messungen durch die Mobilstation) durch entsprechende Probemessungen an der bestimmten Position ermittelt werden. Bei diesen Probemessungen werden die Signale aller benachbarten Funkzellen ausgewertet und auf diese Weise die Teilgruppe der benachbarten Funkzellen mit den besten Messergebnissen ermittelt.

Die Ergebnisse der Probemessungen dienen der Ermittlung der Teilgruppen. Eine entsprechende Teilgruppeninformation für jede Teilgruppe kann in einer netzseitigen Komponente gespeichert werden.

Die Teilgruppe kann aber auch unabhängig von Messergebnissen zusätzlich oder allein aufgrund netzplanerischer Überlegungen bestimmt werden. So kann verhindert werden, dass eine benachbarte Funkzelle der Teilgruppe zugeordnet wird, für die sich an der jeweiligen Position innerhalb der ersten Funkzelle zwar zuvor zufällig gute Empfangsbedingungen ergeben, die aber für einen gegebenenfalls durchzuführenden Zellwechsel (Handover) ungeeignet sind.

Die Erfindung hat den Vorteil, dass die Anzahl der durchzuführenden Messungen auf die Funkzellen der Teilgruppe beschränkt wird und nicht alle benachbarten Funkzellen ausgemessen werden müssen. Hierdurch ist eine Reduzierung der für die Messungen notwendigen Zeit und des Rechenaufwandes möglich. Da üblicherweise die Signale mehrerer Nachbarzellen nur nacheinander ausgemessen werden können, kann durch die Erfindung der gesamte Messvorgang verkürzt werden. Außerdem wird der Stromverbrauch der die Messungen durchführenden Mobilstation reduziert. Die Teilgruppe kann im Extremfall nur eine einzige der benachbarten Funkzellen enthalten.

Die benachbarten Funkzellen können demselben Mobilfunknetz angehören wie die erste Funkzelle. Es ist auch möglich, dass sie einem anderen Mobilfunknetz (gegebenenfalls eines anderen Netztreibers) angehören. In diesem Fall wird das Mobilfunksystem im Sinne dieser Erfindung durch beide Mobilfunknetze gebildet. Deren Funkzellen können einander örtlich überlagert sein. Die beiden Mobilfunknetze können nach unterschiedlichen Standards betrieben werden, zum Beispiel GSM und UMTS.

Weiterhin ist es möglich (unabhängig davon, ob die Funkzellen demselben oder verschiedenen Netzen angehören), dass die erste Funkzelle und die benachbarten Funkzellen in unterschiedlichen Frequenzbereichen betrieben werden. Sie können aber auch im selben Frequenzbereich betrieben werden.

Ferner kann die Größe der Funkzellen gleich oder unterschiedlich sein.

Die Erfindung ist vorteilhaft anwendbar bei der Durchführung von Messungen zur Vorbereitung eines Zellwechsels der Mobilstation (Handover).

Unter "Position" im Sinne der Erfindung ist ein örtlicher Bereich zu verstehen, der eine bestimmte Ausdehnung hat. So kann beispielsweise die erste Funkzelle in zwei oder mehrere Teilbereiche unterteilt werden, wobei die Teilgruppe der benachbarten Funkzellen für einen dieser Teilbereiche bestimmt wird.

Die Erfindung schließt den Fall ein, dass mehrere Funkzellen durch eine gemeinsame Basisstation versorgt werden, die mit gerichteten Antennen diese Funkzellen als räumlich getrennte Sektoren versorgt. Für jede dieser Funkzellen sendet die Basisstation unterschiedliche Signale aus.

Der von der Mobilstation bestimmte Qualitätsparameter der durch die Mobilstation empfangenen Signale der benachbarten Basisstationen kann beispielsweise die Empfangsleistung oder das Signal-zu-Rausch-Verhältnis sein. Es kommen auch andere Parameter in Betracht, insbesondere solche, die eine Entscheidung über einen Zellwechsel beeinflussen können.

Nach einer Weiterbildung der Erfindung wird vor der Durchführung der Messungen für unterschiedliche Positionen von Mobilstationen innerhalb der ersten Funkzelle eine jeweils andere Teilgruppe der benachbarten Funkzellen für die durchzuführenden Messungen festgelegt. Dies ermöglicht bei einer Unterteilung der ersten Funkzelle in geographische Teilbereiche, dass jedem Teilbereich eine individuelle Teilgruppe der benachbarten Funkzellen für die durchzuführenden Messungen zugeordnet wird, wobei jede Teilgruppe so bestimmt werden kann, dass in dem jeweiligen Teilbereich die Signale ihrer Basisstationen von der Mobilstation bessere Messergebnisse liefern, als dies für die übrigen Nachbarzellen der Fall ist.

Nach einer Weiterbildung der Erfindung übermittelt die Basisstation der ersten Funkzelle der Mobilstation eine Teilgruppeninformation, die zur Bestimmung der Teilgruppe der benachbarten Funkzellen dienen. Auf diese Weise wird der Mobilstation mitgeteilt, welche benachbarten Funkzellen der Teilgruppe angehören, für die die Mobilstation die Messungen durchführen soll.

Nach einer Weiterbildung der Erfindung gibt die Teilgruppeninformation eine jeweils andere Teilgruppe der benachbarten Funkzelle für unterschiedliche mögliche Positionen von Mobilstationen in der Funkzelle an. Die Mobilstation ermittelt ihre tatsächliche Position innerhalb der ersten Funkzelle und identifiziert dann die Teilgruppe anhand der ermittelten Position und der erhaltenen Teilgruppeninformation. Dies ermöglicht die selbstständige Auswahl der für sie relevanten Teilgruppe aus der mitgeteilten Teilgruppeninformation durch die Mobilstation aufgrund der von der Mobilstation selbsttätig ermittelten Position. Die Positionsermittlung kann beispielsweise mittels eines GPS-Empfängers der Mobilstation erfolgen.

Nach einer alternativen Ausführungsform der Erfindung wird die tatsächliche Position der Mobilstation ermittelt. Anschließend wird die Teilgruppeninformation unter Berücksichtigung der ermittelten Position erzeugt und von der Basisstation der ersten Funkzelle zur Mobilstation übermittelt. Die Ermittlung der Position der Mobilstation durch die Basisstation kann dabei durch herkömmliche Positionsbestimmungsverfahren geschehen, die dem Fachmann bekannt sind. Beispiele hierfür sind Verfahren der Triangulierung, zum Beispiel die nach dem OTDOA Verfahren (observed time difference of arrival) durchgeführt werden.

Die Basisstation der ersten Funkzelle kann zur Aussendung der Teilgruppeninformation eine gerichtete Antenne verwenden. Dann ist es möglich, in unterschiedliche Richtungen Teilgruppeninformationen für jeweils unterschiedliche Teilgruppen zu übertragen. Alle Mobilstationen, die eine solche gerichtete Teilgruppeninformation empfangen, messen dann lediglich die Signale der benachbarten Funkzellen der ihnen jeweils mitgeteilten Teilgruppe aus. Dabei muss selbstverständlich die Übertragungsrichtung für die jeweilige Teilgruppeninformation mit dem Teilbereich, für den zuvor die jeweilige Teilgruppe bestimmt worden ist, übereinstimmen.

Nach einer Weiterbildung der Erfindung sind im Mobilfunksystem zwei Gruppen von jeweils einander benachbarten Funkzellen einander örtlich überlagert, wobei die erste Funkzelle zur ersten Gruppe gehört und die Teilgruppe der ihr benachbarten Funkzellen zur zweiten Gruppe gehört. Die Mobilstation führt in der ersten Funkzelle Messungen eines Qualitätsparameters von Signalen der Basisstationen wenigstens eines Teils der unmittelbar benachbarten Funkzellen der ersten Gruppe durch. Es wird dann festgestellt, für welche dieser benachbarten Funkzellen der ersten Gruppe sich für die momentane Position der Mobilstation die besten Messergebnisse ergeben. Dies kann entweder durch die Mobilstation selbst oder durch eine netzseitige Komponente erfolgen, der die Mobilstation die Messergebnisse mitteilt. Die Teilgruppe der Funkzellen der zweiten Gruppe wird dann anhand der Funkzellen der ersten Gruppe mit den besten Messergebnissen bestimmt. Daraufhin führt die Mobilstation die Messungen des Qualitätsparameters der Signale der Basisstationen nur dieser Teilgruppe der benachbarten Funkzellen der zweiten Gruppe durch.

Auf die beschriebene Weise erfolgt also die Ermittlung der Teilgruppe der benachbarten Funkzelle der zweiten Gruppe aufgrund von Messungen der Signale von Funkzellen der ersten Gruppe. Es können der Teilgruppe beispielsweise diejenigen Funkzellen der zweiten Gruppe zugeordnet werden, die sich in einem bestimmten Abstand zu den Funkzellen der ersten Gruppe mit den besten Messergebnissen befinden. Diese Weiterbildung der Erfindung ist besonders dann vorteilhaft, wenn die Funkzellen der ersten Gruppe in einem anderen Frequenzbereich betrieben werden und/oder einem anderen Mobilfunknetz angehören als die Funkzellen der zweiten Gruppe. Dann werden im Falle eines vorgesehenen Zellwechsels (Handover) normalerweise nur die Signale der Funkzellen im selben Frequenzbereich bzw. im selben Mobilfunknetz ausgemessen. Soll beim Zellwechsel jedoch in eine Funkzelle der zweiten Gruppe gewechselt werden, können die Messergebnisse der Signale der ersten Gruppe vorteilhaft zur Reduzierung der nun durchzuführenden Messungen der Signale der Funkzellen der zweiten Gruppe ausgenutzt werden.

Nach einer Weiterbildung der Erfindung sind die Funkzellen der zweiten Gruppe kleiner als die Funkzellen der ersten Gruppe. Das bedeutet, dass bei einem Zellwechsel von der ersten Funkzelle in eine Funkzelle der zweiten Gruppe eine größere Anzahl von Signalen der benachbarten Basisstationen vorhanden ist, als bei einem Zellwechsel in eine Funkzelle der ersten Gruppe. Daher kann die geringere Anzahl von Signalen der benachbarten Funkzellen der ersten Gruppe gemessen werden, um die so gewonnenen Messergebnisse auf die beschriebene Art zur Bestimmung der Teilgruppe der Funkzellen der zweiten Gruppe zu verwenden, so dass anschließend nur noch die Signale der Teilgruppe der zweiten Gruppe der Funkzellen von der Mobilstation ausgewertet werden müssen.

Die erfindungsgemäße Einrichtung zum Bestimmen einer Teilgruppe von benachbarten Funkzellen für eine Mobilfunksystem weist die für die Durchführung des erfindungsgemäßen Verfahrens notwendigen Komponenten auf.

Die Erfindung wird im Folgenden anhand von in den Figuren dargestellten Ausführungsbeispielen näher erläutert. Es zeigen:
- Figur 1: eine erste Gruppe von Funkzellen eines Mobilfunksystems,
- Figur 2: eine andere Darstellung der Funkzellen aus Figur 1 mit eingezeichneten Messpunkten,
- Figur 3: eine zweite Gruppe von der ersten Gruppe örtlich überlagerten Funkzellen des Mobilfunksystems aus Figur 1,
- Figur 4: eine Zuordnung von Funkzellen der ersten Gruppe zu Funkzellen der zweiten Gruppe,
- Figur 5: die Bestimmung unterschiedlicher Teilgruppen innerhalb der zweiten Gruppe von Funkzellen und
- Figur 6: unterschiedliche Signale, die zwischen Basisstationen und Mobilstationen des Mobilfunksystems übertragen werden.

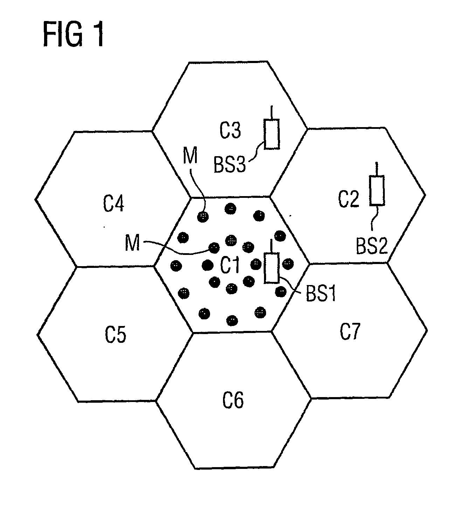

Figur 1 zeigt einen Ausschnitt eines erfindungsgemäßen Mobilfunksystems. Es handelt sich dabei um ein Mobilfunksystem nach dem UMTS-FDD-(Frequency Division Duplex)Standard. Es handelt sich um ein zellulares Mobilfunksystem, bei dem eine große Anzahl voneinander benachbarten Funkzellen eine flächendeckende Versorgung der mobilen Teilnehmer ermöglichen. In Figur 1 sind sieben Funkzellen C1 bis C7 dargestellt. Jeder Funkzelle ist eine Basisstation BS1, BS2, BS3... zugeordnet, die die jeweilige Funkzelle C1 bis C7 versorgt. In der Figur 1 wurden nur die ersten drei Basisstationen BS1 bis BS3 dargestellt. Die Basisstationen können entweder zentral in der Mitte der jeweiligen Funkzelle oder aber an den Grenzpunkten jeweils dreier der Funkzellen angeordnet sein und von dort ihre Signale in die jeweilige Funkzelle mittels gerichteter Antennen abstrahlen. Im letzt genannten Fall können auch mehrere der Funkzellen durch eine gemeinsame Basisstation mit Sektorantennen versorgt werden.

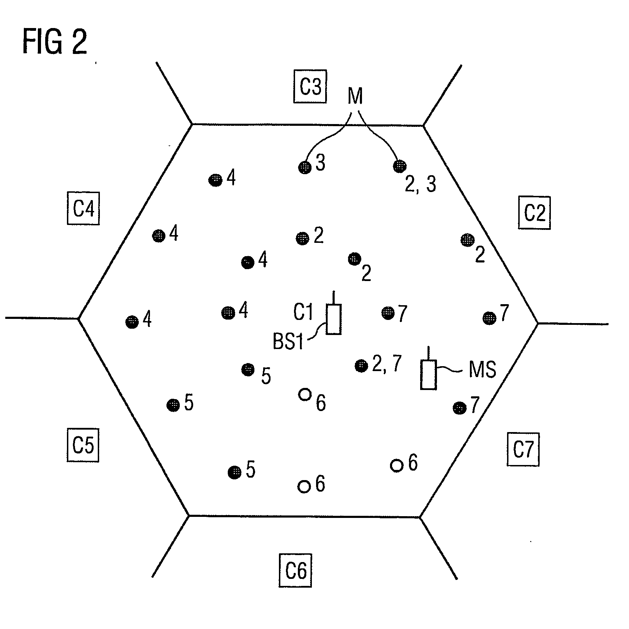

In Figur 1 sind innerhalb der ersten Funkzelle C1 eine Vielzahl von punktförmigen Messpunkten M eingezeichnet, auf die im Folgenden anhand von Figur 2 noch näher eingegangen wird.

Figur 2 zeigt die Funkzellen C1 bis C7 aus Figur 1 in einer vergrößerten Darstellung. Innerhalb der ersten Funkzelle C1 sind wieder die Messpunkte M eingetragen. Mittels eines geeigneten Messgerätes, was im Prinzip wie eine Mobilstation des Mobilfunksystems konstruiert sein kann, wurde für jeden einzelnen Messpunkt M festgestellt, für welche der benachbarten Funkzellen C2 bis C7 sich am jeweiligen Ort die höchsten Empfangsleistungen für Signale ergeben, die die Basisstationen BS2, BS3... der Nachbarzellen C2 bis C7 in einem Organisationskanal rundsenden (broadcasten).

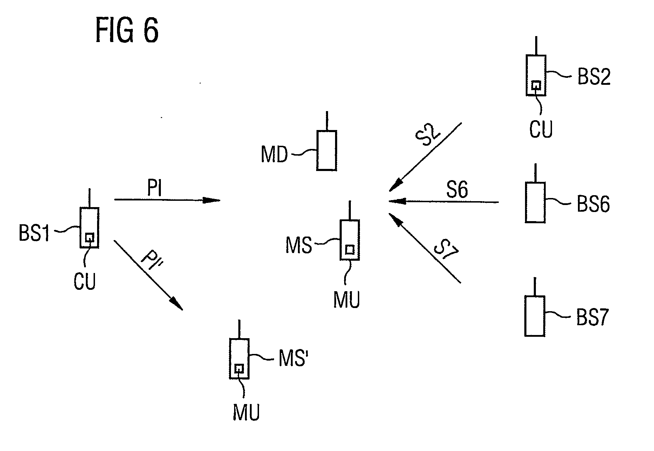

Anhand von Figur 6 kann eine mögliche Durchführung dieser Messungen an den Messpunkten M erläutert werden. Ein Messgerät MD, das sich innerhalb der ersten Funkzelle C1 an der Position des jeweiligen Messpunktes M befindet, empfängt dort Signale S2, S6, S7 der Organisationskanäle aller benachbarten Funkzellen C2 bis C7. In Figur 6 sind nur drei dieser Signale S2, S6, S7 dargestellt. Das Messgerät MD ermittelt nun dasjenige oder diejenigen Signale mit den höchsten Empfangsleistungen.

In Figur 2 sind neben jedem Messpunkt M diejenigen benachbarten Funkzellen C2 bis C7 notiert, für die sich die höchsten Empfangsleistungswerte bei der soeben beschriebenen Messung ergeben haben. Dabei bedeutet zum Beispiel eine "2" neben dem Messpunkt M, dass sich für die Aussendungen der zweiten Basisstation BS2 der zweiten Funkzelle C2 die höchste Empfangsleistung an dem jeweiligen Messpunkt M ergeben hat.

Im Folgenden wird nun die Vorbereitung eines Zellwechsels einer Mobilstation MS von der ersten Funkzelle C1 in eine der benachbarten Funkzellen C2 bis C7 beschrieben. Gemäß Figur 2 soll sich die Mobilstation MS im rechten unteren Bereich der ersten Funkzelle C1 befinden. Sie befindet sich damit an einer Position innerhalb eines Teilbereiches der ersten Funkzelle C1, für den die darin enthaltenen Messpunkte M die Nachbarzellen C2, C6 und C7 als diejenigen Nachbarzellen mit der größten Empfangsleistung ihrer Signale S2, S6, S7 aufweisen. Diese Nachbarzellen bilden eine Teilgruppe im Sinne der Erfindung. Die Mobilstation MS berücksichtigt eine entsprechende Teilgruppeninformation und misst zur Vorbereitung ihres Zellwechsels nur die Signale S2, S6, S7 dieser Teilgruppe C2, C6, C7 der Nachbarzellen C2 bis C7 der ersten Funkzelle C1 aus.

Gemäß Figur 6 erhält die Mobilstation MS von der ersten Basisstation BS1 der ersten Funkzelle C1 eine Teilgruppeninformation PI, die es ihr erlaubt, die ihrer Position innerhalb der Funkzelle C1 entsprechende Teilgruppe der benachbarten Funkzellen C2 bis C7 zu identifizieren. Beim hier betrachteten Ausführungsbeispiel kennt die Basisstation BS1 der ersten Funkzelle C1 die Position der Mobilstation MS und schickt dieser die für diese Position passende Teilgruppeninformation PI. Eine weitere Mobilstation MS' erhält eine ihrer individuellen Position innerhalb der ersten Funkzelle C1 angepasste Teilgruppeninformation PI'.

Bei einer anderen Ausführungsform der Erfindung kann auch die Mobilstation MS, MS' selbst ihre Position, beispielsweise mit Hilfe eines GPS-Empfängers, bestimmen. Die Basisstation BS1 kann dann an alle Mobilstationen MS, MS` dieselbe Teilgruppeninformation PI übertragen, der unterschiedliche Teilgruppen für unterschiedliche Teilbereiche der bzw. Positionen in der ersten Funkzelle C1 entnehmbar sind. Jede Mobilstation MS, MS' kann dann aufgrund der von ihr selbst ermittelten eigenen Position innerhalb der Teilgruppeninformation diejenige Teilgruppe identifizieren, die für sie maßgeblich ist.

Bei einer wiederum anderen Ausführungsform der Erfindung ist es auch möglich, dass weder die erste Basisstation BS1 noch die Mobilstationen MS, MS' Kenntnis von der Position der Mobilstation haben müssen. Stattdessen überträgt die erste Basisstation BS1 in den den jeweiligen unterschiedlichen Teilgruppen der benachbarten Funkzellen C2 bis C7 entsprechenden Teilbereichen der ersten Funkzelle C1 mittels einer gerichteten Antenne die jeweils passende Teilgruppeninformation, die zur Identifizierung der entsprechenden Teilgruppe dient.

Die erste Basisstation BS1 in Figur 6 weist eine Einrichtung CU zum Bestimmen der Teilgruppe C2, C6, C7 auf, die zu diesem Zweck die in Figur 2 eingetragenen Messergebnisse an den Messpunkten M berücksichtigt. Die Einrichtung CU kann bei anderen Ausführungsformen der Erfindung selbstverständlich außerhalb der ersten Basisstation BS1 angeordnet sein. Sie kann insbesondere in einer zentralen Einheit des Mobilfunksystems angeordnet sein, die mit einer Vielzahl von Basisstationen BS1, BS2, BS3... verbunden ist und für diese Basisstationen die Ermittlung der unterschiedlichen Teilgruppen übernimmt.

Die Mobilstation MS in Figur 6 weist eine Messeinheit MU auf, die zur Durchführung der Messungen bezüglich der Signale S2, S6, S7 der Teilgruppe C2, C6, C7 von benachbarten Funkzellen dient. Dabei führt die Messeinheit MU die genannten Messungen nach Auswertung der an sie übermittelten Teilgruppeninformation PI durch.

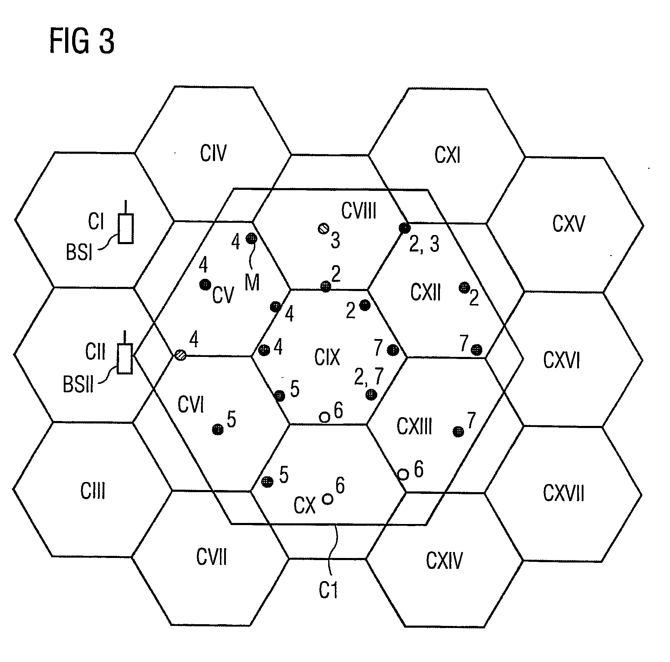

Figur 3 zeigt für ein zweites Ausführungsbeispiel der Erfindung eine zweite Gruppe von Funkzellen CI bis CXVII des Mobilfunksystems aus Figur 1. Die Funkzellen der zweiten Gruppe sind kleiner als die in Figur 1 dargestellten Funkzellen der ersten Gruppe. Die Funkzellen der zweiten Gruppe können einem anderen Mobilfunknetz angehören, als die Funkzellen der ersten Gruppe. Beide Netze zusammen werden hier jedoch als ein Mobilfunksystem bezeichnet. Die Funkzellen der zweiten Gruppe können nach einem anderen Mobilfunkstandard betrieben werden als diejenigen der ersten Gruppe, zum Beispiel dem GSM-Standard.

Jeder Funkzelle CI bis CXVII der zweiten Gruppe ist wiederum eine Basisstation BSI, BSII... zugeordnet, von denen in Figur 3 nur die beiden ersten dargestellt sind.

Die Funkzellen CI bis CXVII der zweiten Gruppe sind den Funkzellen C1 bis C7 der ersten Gruppe örtlich überlagert. In Figur 3 ist lediglich die örtlich überlagerte erste Funkzelle C1 aus Figur 1 eingezeichnet. Innerhalb der Funkzelle C1 in Figur 3 sind wiederum die Messpunkte M mit den Messergebnissen aus Figur 2 eingetragen. Bei diesem Ausführungsbeispiel werden die Funkzellen C1 bis C7 der ersten Gruppe in einem anderen Frequenzbereich betrieben, als die Funkzellen CI bis CXVII der zweiten Gruppe. Beide Gruppen von Funkzellen werden jedoch nach dem UMTS-FDD-Standard betrieben. Es handelt sich somit um örtlich überlagerte Makrozellen C1 bis C7 und Mikrozellen CI bis CXVII.

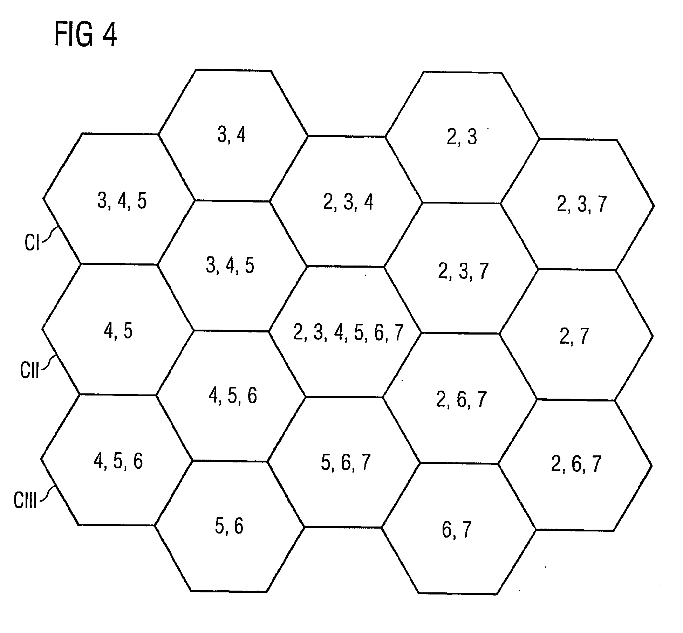

Figur 4 zeigt noch einmal die zweite Gruppe der Funkzelle CI bis CXVII. Entsprechend den Messpunkten M und den zugehörigen Messergebnissen wurden jeder der Funkzellen CI bis CXVII der zweiten Gruppe eine oder mehrere der Funkzellen C2 bis C7 der ersten Gruppe zugeordnet.

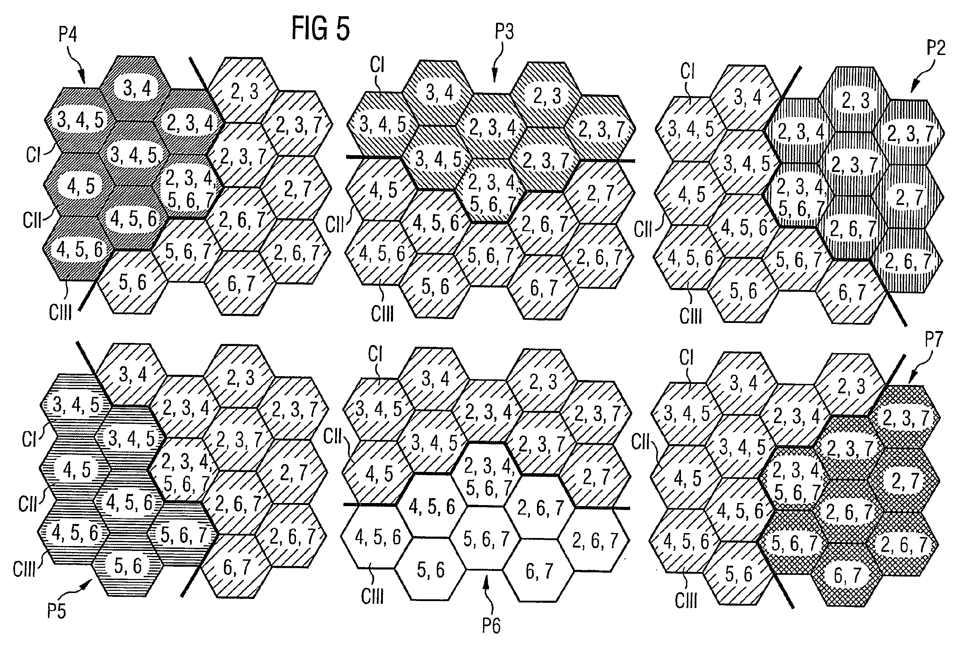

Figur 5 zeigt sechs verschiedene Teilgruppen P2 bis P7, die innerhalb der Funkzellen CI bis CXVII gebildet werden. Die Teilgruppe P4 in der ersten Reihe von Figur 5 links wird einer Mobilstation MS zugeordnet, wenn sich diese in einem Teilbereich der ersten Funkzelle C1 befindet, für den die Messungen der Mobilstation MS die Funkzelle C4 der ersten Gruppe als stärkste Funkzelle ermittelt haben. Die Teilgruppe P3 in der Mitte der ersten Zeile in Figur 5 enthält diejenigen Funkzellen der zweiten Gruppe, die einem Teilbereich der ersten Funkzelle C1 zugeordnet werden, in dem die Messergebnisse die dritte Funkzelle C3 der ersten Gruppe als stärkste Funkzelle ermittelt haben. Für die übrigen Teilgruppen P2, P5, P6, P7 in Figur 5 gilt Entsprechendes. Jede Teilgruppe P2 bis P7 in Figur 5 weist nur etwa die Hälfte der insgesamt 17 Funkzellen CI bis CXVII der zweiten Gruppe auf.

Aufgrund der Position der Mobilstation MS innerhalb der ersten Funkzelle C1 wird nun die entsprechende Teilgruppe P2 bis P7 in Figur 5 ausgewählt. Befindet sich die Mobilstation MS beispielsweise an der in Figur 2 gezeigten Position, also in einem Teilbereich der ersten Funkzelle C1, in dem die siebte Funkzelle C7 der ersten Gruppe am besten zu empfangen ist, wird die Teilgruppe P7 in der zweiten Zeile der Figur 5 rechts ausgewählt. Die Mobilstation MS führt dann zur Vorbereitung eines Zellwechsels von der ersten Funkzelle C1 in eine der Funkzellen CI bis CXVII der zweiten Gruppe nur eine Messung der in Organisationskanälen übertragenen Signale der Basisstationen der Teilgruppe P7 der Funkzellen der zweiten Gruppe durch. Die Mobilstation MS misst daher nur acht der insgesamt siebzehn der ersten Funkzelle C1 benachbarten Funkzellen CI bis CXVII der zweiten Gruppe durch.

Bei UMTS-FDD wird zur Ausmessung von Funkzellen, die in einem anderen Frequenzbereich arbeiten als die Funkzelle, in der sich die Mobilstation zur Zeit befindet, im sogenannten compressed mode gearbeitet. Im compressed mode muss die Datenübertragung zeitweise unterbrochen werden, um den Empfänger auf die anderen Frequenzen einzustellen und die Nachbarzellen auszumessen. Für die eigentliche Datenübertragung steht somit weniger Zeit zur Verfügung. Außerdem nimmt das Messen der Signale aus den potentiellen Zielzellen eine gewisse Zeit in Anspruch, womit der eventuell dringend notwendige Zellwechsel verzögert wird. Während das Ausmessen von Nachbarzellen, die im selben Frequenzbereich wie die aktuelle Zelle arbeiten, zeitlich parallel zum Datenempfang durchgeführt werden kann, muss der Datenempfang beim Ausmessen von potentiellen Zielzellen, die in einem anderen Frequenzbereich arbeiten oder einem anderen Mobilfunknetz angehörigen, unterbrochen werden. Durch die Erfindung kann die Dauer der Unterbrechung reduziert werden.

Die Teilgruppen P2 bis P7 aus Figur 5 werden in Abhängigkeit von der aktuellen Position der Mobilstation MS wiederum über eine entsprechende Teilgruppeninformation PI von der ersten Basisstation BS1 der Mobilstation MS signalisiert (vergleiche Figur 6).

Die Teilgruppeninformation PI kann bei anderen Ausführungsbeispielen der Erfindung auch eine bestimmte Auswahlregel für die Teilgruppe der auszumessenden benachbarten Funkzellen angeben. Solche Regeln können beispielsweise lauten: "Wenn innerhalb der ersten Gruppe die Funkzelle A die beste ist, dann sind die Zellen B und C der zweiten Gruppe auszumessen" oder "Wenn die Zelle A der ersten Gruppe die beste Zelle ist, dann sind die Zellen B und C der zweiten Gruppe nicht auszumessen". Diese Regeln können z. B. in der neighbour cell information list der measurement control oder in der neighbour cell information list eines system information blocks gemäß dem UMTS-FDD Standard signalisiert werden.

Es ist auch möglich, dass die Mobilstation MS die stärkste Nachbarzelle C2 bis C7 der ersten Gruppe ermittelt und der ersten Basisstation BS1 mitteilt, woraufhin von dieser oder einer zentralen Einheit innerhalb des Mobilfunksystems aufgrund dieser Mitteilung die entsprechenden Nachbarzellen der auszumessenden Teilgruppe ausgewählt werden. Dass heißt es erfolgt netzseitig die Auswahl und Signalisierung der auszumessenden Teilgruppe.

Es ist auch möglich, dass über die Teilgruppeninformation PI der Mobilstation MS mitgeteilt wird, in welcher Reihenfolge sie die benachbarten Funkzellen ausmessen soll. Die den möglichen Positionen der Mobilstation MS zugeordneten Teilgruppen können auch aktualisiert werden, in dem die Mobilstation Rückmeldung gibt, fall sie einen Fehler in der Zuordnung einer Funkzellen zu der Teilgruppe erkennt. Teilt die erste Basisstation BS1 der Mobilstation MS beispielsweise mit, drei Funkzellen einer bestimmten Teilgruppe auszumessen, kann die Mobilstation MS1 jedoch nur zwei dieser Funkzellen empfangen, informiert sie das System hierüber, so dass die nicht empfangbare Funkzelle aus der entsprechenden Teilgruppe für die Zukunft entfernt wird.

Eine weitere mögliche Regel, die der Mobilstation MS über die Teilgruppeninformation PI mitgeteilt werden kann, lautet: "Wenn die Zellen A und B der ersten Gruppe die stärksten Zellen sind und die Zelle C der ersten Gruppe die schwächste Zelle, dann wähle die Zelle D der zweiten Gruppe 1 als auszumessende Nachbarzelle der Teilgruppe".

Beim zweiten Ausführungsbeispiel erfolgt die Positionsbestimmung der Mobilstation MS durch diese auf indirekte Weise selbst. Sie führt nämlich die Ermittlung der stärksten Nachbarzelle C2 bis C7 der ersten Gruppe durch und ermittelt dann aufgrund der ihr von der ersten Basisstation BS1 mitgeteilten Teilgruppeninformation PI die auszumessende Teilgruppe P2 bis P7 der zweiten Gruppe von Funkzellen CI bis CXVII. Da die stärkste Nachbarzelle der ersten Gruppe C2 bis C7 für die jeweilige Position der Mobilstation MS ortsabhängig unterschiedlich ist, handelt es sich beim zweiten Ausführungsbeispiel beim Feststellen der stärksten Nachbarzelle um eine indirekte Positionsbestimmung der Mobilstation MS. Beim zweiten Ausführungsbeispiel kann daher eine Positionsbestimmung durch die erste Basisstation BS1 oder mit Hilfe einer anderen Positionsbestimmungsmethode (zum Beispiel mittels eines GPS Empfängers) in der Mobilstation MS entfallen.

## Patentansprüche

1. Verfahren zum Betrieb eines Mobilfunksystems mit wenigstens einer ersten Funkzelle (C1) und mehreren der ersten Funkzelle benachbarten Funkzellen (C2 bis C7; CI bis CXVII), die durch jeweils eine Basisstation (BS1, BS2, BS3...; BSI, BSII...) versorgt werden, bei dem
- in Abhängigkeit einer Position einer Mobilstation (MS) innerhalb der ersten Funkzelle (C1) eine Teilgruppe (C2, C6, C7; P2 bis P6) der benachbarten Funkzellen (C2 bis C7; CI bis CXVII) bestimmt wird
- und anschließend die Mobilstation (MS) Messungen eines Qualitätsparameters von Signalen (S2, S6, S7) der Basis-stationen nur dieser Teilgruppe (C2, C6, C7; P2 bis P6) der benachbarten Funkzellen (C2 bis C7; CI bis CXVII) durchführt
**gekennzeichnet durch** folgende weitere Merkmale:
- im Mobilfunksystem sind zwei Gruppen (C1 bis C7, CI bis CXVII) von jeweils einander benachbarten Funkzellen einander örtlich überlagert, wobei die erste Funkzelle (C1) zur ersten Gruppe (C1 bis C7) gehört und die Teilgruppe (P2 bis P6) der ihr benachbarten Funkzellen zur zweiten Gruppe (CI bis CXVII) gehört,
- die Mobilstation (MS) führt in der ersten Funkzelle (C1) Messungen eines Qualitätsparameters von Signalen der Basisstationen wenigstens eines Teils der unmittelbar benachbarten Funkzellen (C2 bis C7) der ersten Gruppe (C1 bis C7) **durch**,
- es wird festgestellt, für welche dieser benachbarten Funkzellen (C2 bis C7) der ersten Gruppe (C1 bis C7) sich für die momentane Position der Mobilstation (MS) die besten Messergebnisse ergeben,
- die Teilgruppe (P2 bis P6) der Funkzellen der zweiten Gruppe (CI bis CXVII) wird anhand der Funkzellen der ersten Gruppe (C1 bis C7) mit den besten Messergebnissen bestimmt,
- und die Mobilstation führt die Messungen des Qualitätsparameters der Signale der Basisstationen nur der Teilgruppe (P2 bis P6) der benachbarten Funkzellen der zweiten Gruppe (CI bis CXVII) **durch**.

2. Verfahren nach Anspruch 1, bei dem
die Funkzellen der zweiten Gruppe (CI bis CXVII) kleiner als die Funkzellen der ersten Gruppe (C1 bis C7) sind.

3. Verfahren nach einem der Ansprüche 1 oder 2, bei dem
die Funkzellen der beiden Gruppen (C1 bis C7, CI bis CXVII) in unterschiedlichen Frequenzbereichen betrieben werden.

4. Verfahren nach einem der vorstehenden Ansprüche, bei dem vor der Durchführung der Messungen für unterschiedliche Positionen von Mobilstationen innerhalb der ersten Funkzelle (C1) eine jeweils andere Teilgruppe der benachbarten Funkzellen (C2 bis C7; CI bis CXVII) für die durchzuführenden Messungen festgelegt wird.

5. Verfahren nach einem der vorstehenden Ansprüche, bei dem die Basisstation (BS1) der ersten Funkzelle (C1) der Mobilstation (MS) eine Teilgruppeninformation (PI, PI') übermittelt, die zur Bestimmung der Teilgruppe (C2, C6, C7; P2 bis P6) der benachbarten Funkzellen (C2 bis C7; CI bis CXVII) dient.

6. Verfahren nach Anspruch 5, bei dem
- die Teilgruppeninformation (PI, PI') eine jeweils andere Teilgruppe der benachbarten Funkzellen (C2 bis C7; CI bis CXVII) für unterschiedliche mögliche Positionen (M) von Mobilstationen in der ersten Funkzelle (C1) angibt,
- die Mobilstation (MS) ihre tatsächliche Position innerhalb der ersten Funkzelle (C1) ermittelt
- und die Mobilstation (MS) die Teilgruppe (C2, C6, C7; P2 bis P6) anhand der ermittelten Position und der Teilgruppeninformation (PI, PI') identifiziert.

7. Verfahren nach Anspruch 5, bei dem
- die tatsächliche Position der Mobilstation (MS) ermittelt wird
- und die Teilgruppeninformation (PI, PI') unter Berücksichtigung der ermittelten Position erzeugt und von der Basisstation (BS1) der ersten Funkzelle (C1) zur Mobilstation (MS) übermittelt wird.

8. Verfahren nach Anspruch 5, bei dem
die Basisstation (BS1) der ersten Funkzelle (C1) zur Aussendung der Teilgruppeninformation (PI, PI') eine gerichtete Antenne verwendet.

9. Einrichtung (CU) zum Bestimmen einer Teilgruppe (C2, C6, C7; P2 bis P6) von benachbarten Funkzellen (C2 bis C7; CI bis CXVII) einer ersten Funkzelle (C1) eines Mobilfunksystems, bei dem die Funkzellen durch jeweils eine Basisstation (BS1, BS2, BS3...; BSI, BSII,...) versorgt werden, mit Mitteln zum Bestimmen einer Teilgruppe, für die eine Mobilstation (MS) Messungen eines Qualitätsparameters von Signalen (S2, S6, S7) der Basisstationen durchführen soll, in Abhängigkeit einer Position der Mobilstation (MS) innerhalb der ersten Funkzelle (C1),
**gekennzeichnet durch** folgende weitere Merkmale:
- im Mobilfunksystem sind zwei Gruppen (C1 bis C7, CI bis CXVII) von jeweils einander benachbarten Funkzellen einander örtlich überlagert, wobei die erste Funkzelle (C1) zur ersten Gruppe (C1 bis C7) gehört und die Teilgruppe (P2 bis P6) der ihr benachbarten Funkzellen zur zweiten Gruppe (CI bis CXVII) gehört,
- und die Einrichtung weist Mittel auf zum Bestimmen der Teilgruppe (P2 bis P6) der Funkzellen der zweiten Gruppe (CI bis CXVII) anhand der Funkzellen der ersten Gruppe (C1 bis C7), zu denen zuvor die Mobilstation (MS) die besten Messergebnisse ermittelt hat.

## Claims

1. Method for operating a mobile radio system comprising at least one first radio cell (C1) and a plurality of radio cells (C2 to C7; CI to CXVII) adjacent to the first radio cell, each of which is covered by a base station (BS1, BS2, BS3...; BSI, BSII...), wherein
- a sub-group (C2, C6, C7; P2 to P6) of the adjacent radio cells (C2 to C7; CI to CXVII) is determined as a function of the position of a mobile station (MS) within the first radio cell (C1)
- and the mobile station (MS) then performs measurements of a quality parameter of signals (S2, S6, S7) from the base stations of just this sub-group (C2, C6, C7; P2 to P6) of the adjacent radio cells (C2 to C7; CI to CXVII),
**characterised by** the following further features:
- two groups (C1 to C7, CI to CXVII) of radio cells adjacent to one another in each case are overlaid locally on each other in the mobile radio system, with the first radio cell (C1) belonging to the first group (C1 to C7) and the sub-group (P2 to P6) of the radio cells adjacent thereto belonging to the second group (CI to CXVII),
- the mobile station (MS) performs measurements of a quality parameter of signals from the base stations of at least some of the immediately adjacent radio cells (C2 to C7) of the first group (C1 to C7) in the first radio cell (C1),
- it is ascertained for which of these adjacent radio cells (C2 to C7) of the first group (C1 to C7) the best measurement results are obtained for the current position of the mobile station (MS),
- the sub-group (P2 to P6) of the radio cells of the second group (CI to CXVII) is determined on the basis of the radio cells of the first group (C1 to C7) with the best measurement results,
- and the mobile station performs the measurements of the quality parameter of the signals from the base stations just of the sub-group (P2 to P6) of the adjacent radio cells of the second group (CI to CXVII).

2. Method according to claim 1, wherein
the radio cells of the second group (CI to CXVII) are fewer in number than the radio cells of the first group (C1 to C7).

3. Method according to one of claims 1 or 2, wherein
the radio cells of the two groups (C1 to C7, CI to CXVII) are operated in different frequency ranges.

4. Method according to one of the preceding claims, wherein before the measurements are performed for different positions of mobile stations within the first radio cell (C1), another sub-group of the adjacent radio cells (C2 to C7; CI to CXVII) is determined in each case for the measurements to be performed.

5. Method according to one of the preceding claims, wherein the base station (BS) of the first radio cell (C1) transmits sub-group information (PI, PI') to the mobile station (MS), which information is used to determine the sub-group (C2, C6, C7; P2 to P6) of the adjacent radio cells (C2 to C7; CI to CXVII).

6. Method according to claim 5, wherein
- the sub-group information (PI, PI') specifies another sub-group of the adjacent radio cells (C2 to C7; CI to CXVII) in each case for different possible positions (M) of mobile stations in the first radio cell (C1),
- the mobile station (MS) determines its actual position within the first radio cell (C1),
- and the mobile station (MS) identifies the sub-group (C2, C6, C7; P2 to P6) on the basis of the determined position and the sub-group information (PI, PI').

7. Method according to claim 5, wherein
- the actual position of the mobile station (MS) is determined
- and the sub-group information (PI, PI') is generated taking into account the determined position and transmitted by the base station (BS1) of the first radio cell (C1) to the mobile station (MS).

8. Method according to claim 5, wherein
the base station (BS1) of the first radio cell (C1) uses a directional antenna to transmit the sub-group information (PI, PI').

9. Device (CU) for determining a sub-group (C2, C6, C7; P2 to P6) of adjacent radio cells (C2 to C7; CI to CXVII) of a first radio cell (C1) of a mobile radio system, wherein the radio cells are each covered by a base station (BS1, BS2, BS3...; BSI, BSII...),
having means for determining a sub-group for which a mobile station (MS) is to perform measurements of a quality parameter of signals (S2, S6, S7) from the base stations as a function of the position of a mobile station (MS) within the first radio cell (C1),
**characterised by** the following further features:
- two groups (C1 to C7, CI to CXVII) of radio cells adjacent to one another in each case are overlaid locally on each other in the mobile radio system, with the first radio cell (C1) belonging to the first group (C1 to C7) and the sub-group (P2 to P6) of the radio cells adjacent thereto belonging to the second group (CI to CXVII),
- and the device has means for determining the sub-group (P2 to P6) of the radio cells of the second group (CI to CXVII) on the basis of the radio cells of the first group (C1 to C7) for which the mobile station (MS) previously determined the best measurement results.

## Revendications

1. Procédé pour exploiter un système de téléphonie mobile comprenant au moins une première cellule radio (C1) et plusieurs cellules radio (C2 à C7 ; CI à CXVII) voisines de la première cellule radio, qui sont alimentées par respectivement une station de base (BS1, BS2, BS3, ... ; BSI, BSII...), dans lequel
- en fonction d'une position d'une station mobile (MS) à l'intérieure de la première cellule radio (C1), on définit un groupe partiel (C2, C6, C7 ; P2 à P6) des cellules radio (C2 à C7 ; CI à CXVII) voisines
- et ensuite la station mobile (MS) effectue des mesures d'un paramètre de qualité de signaux (S2, S6, S7) des stations de base uniquement de ce groupe partiel (C2, C6, C7 ; P2 à P6) des cellules radio (C2 à C7 ; CI à CXVII) voisines
**caractérisé par** les autres caractéristiques suivantes :
- dans le système de téléphonie mobile, deux groupes (C1 à C7, CI à CXVII) de cellules radio respectivement voisines sont superposées localement, la première cellule radio (C1) appartenant au premier groupe (C1 à C7) et le groupe partiel (P2 à P6) des cellules radio qui lui sont voisines appartenant au second groupe (CI à CXVII),
- la station mobile (MS) effectue dans la première cellule radio (C1) des mesures d'un paramètre de qualité de signaux des stations de base d'au moins une partie des cellules radio (C2 à C7) directement voisines du premier groupe (C1 à C7),
- on détermine pour laquelle de ces cellules radio (C2 à C7) voisines du premier groupe (C1 à C7) on obtient les meilleurs résultats de mesure pour la position momentanée de la station mobile (MS),
- le groupe partiel (P2 à P6) des cellules radio du second groupe (CI à CXVII) est déterminé à l'aide des cellules radio du premier groupe (C1 à C7) avec les meilleurs résultats de mesure,
- et la station mobile effectue les mesures du paramètre de qualité des signaux des stations de base uniquement du groupe partiel (P2 à P6) des cellules radio voisines du second groupe (CI à CXVII) .

2. Procédé selon la revendication 1, dans lequel
les cellules radio du second groupe (CI à CXVII) sont plus petites que les cellules radio du premier groupe (C1 à C7).

3. Procédé selon l'une quelconque des revendications 1 ou 2, dans lequel
les cellules radio des deux groupes (C1 à C7, CI à CXVII) sont exploitées dans différentes plages de fréquences.

4. Procédé selon l'une quelconque des revendications précédentes, dans lequel
un autre groupe partiel respectif des cellules radio (C2 à C7 ; CI à CXVII) voisines pour les mesures à effectuer est défini avant la mise en oeuvre des mesures pour différentes positions de stations mobiles à l'intérieur de la première cellule radio (C1) .

5. Procédé selon l'une quelconque des revendications précédentes, dans lequel
la station de base (BS1) de la première cellule radio (C1) transmet à la station mobile (MS) une information sur le groupe partiel (PI, PI') qui sert à déterminer le groupe partiel (C2, C6, C7 ; P2 à P6) des cellules radio voisines (C2 à C7 ; CI à CXVII).

6. Procédé selon la revendication 5, dans lequel
- l'information sur le groupe partiel (PI, PI') indique un autre groupe partiel respectif des cellules radio (C2 à C7 ; CI à CXVII) voisines pour différentes positions (M) possibles de stations mobiles dans la première cellule radio (C1),
- la station mobile (MS) détermine sa position réelle à l'intérieur de la première cellule radio (C1)
- et la station mobile (MS) identifie le groupe partiel (C2, C6, C7 ; P2 à P6) à l'aide de la position déterminée et de l'information sur le groupe partiel (PI, PI').

7. Procédé selon la revendication 5, dans lequel
- la position réelle de la station mobile (MS) est déterminée
- et l'information sur le groupe partiel (PI, PI') est générée en tenant compte de la position déterminée et est transmise de la station de base (BS1) de la première cellule radio (C1) à la station mobile (MS).

8. Procédé selon la revendication 5, dans lequel
la station de base (BS1) de la première cellule radio (C1) utilise une antenne dirigée pour l'envoi de l'information sur le groupe partiel (PI, PI').

9. Dispositif (CU) pour déterminer un groupe partiel (C2, C6, C7; P2 à P6) de cellules radio (C2 à C7 ; CI à CXVII) voisines d'une première cellule radio (C1) d'un système de téléphonie mobile, dans lequel les cellules radio sont alimentées chacune par une station de base (BS1, BS2, BS3 ... ; BSI, BSII, ...), avec des moyens pour déterminer un groupe partiel, pour lequel une station mobile (MS) doit effectuer des mesures d'un paramètre de qualité de signaux (S2, S6, S7) des stations de base, en fonction d'une position des stations mobiles (MS) à l'intérieur de la première cellule radio (C1),
**caractérisé par** d'autres caractéristiques suivantes :
- dans le système de téléphonie mobile, deux groupes (C1 à C7, CI à CXVII) de cellules radio respectivement voisines sont superposés localement les unes aux autres, la première cellule radio (C1) appartenant au premier groupe (C1 à C7) et le groupe partiel (P2 à P6) des cellules radio qui lui sont voisines appartenant au second groupe (CI à CXVII),
- et le dispositif présente des moyens pour déterminer le groupe partiel (P2 à P6) des cellules radio du second groupe (CI à CXVII) à l'aide des cellules radio du premier groupe (C1 à C7), pour lesquelles la station mobile (MS) a déterminé auparavant les meilleurs résultats de mesure.
